# FASCICULE DE BREVET EUROPEEN

(11) **EP 0 391 007 B1**
(45) Date de publication et mention de la délivrance du brevet: **17.08.1994**
(21) Numéro de dépôt: 89401894.4
(22) Date de dépôt: 30.06.1989
(51) Int. Cl.: C22C 38/58, E01B 7/10

(54) **Insert pour le raccordement d'une pièce en acier au manganèse à une autre pièce en acier au carbone, procédé de raccordement à l'aide de cet insert, et assemblage obtenu par ce procédé**
Zwischenstück zur Verbindung eines Bauteils aus Manganstahl mit einem Bauteil aus Kohlenstoffstahl, Verfahren zur Verbindung mit Hilfe des Zwischenstückes und Anordnung nach diesem Verfahren
Intermediate member for connecting a part made from manganese steel to a part made from carbon steel, process for connecting these materials using this intermediate member and assembly obtained by this process

(30) Priorité: 05.04.1989 FR 8904481
(43) Date de publication de la demande: 10.10.1990
(73) Titulaire: MANOIR INDUSTRIES, F-75587 Paris Cedex 12 (FR)
(72) Inventeur: Pons, Fernand, F-27460 Alisay (FR); Delayen, Yvon, F-62990 Beaurainville (FR)
(74) Mandataire: Durand, Yves Armand Louis

(56) Documents cités:
- EP-A- 0 254 787
- EP-A- 0 260 233
- FR-A- 803 538
- FR-A- 1 538 838
- FR-A- 2 346 495
- FR-A- 2 350 424
- GB-A- 2 002 668
- US-A- 2 225 440

## Description

La présente invention a essentiellement pour objet un insert pour le raccordement d'une pièce en acier au manganèse, telle que par exemple une pièce de voie formant coeur de croisement, à une ou plusieurs autres pièces au carbone, telles que par exemple les rails des réseaux ferroviaires.

L'invention vise également un procédé de raccordement de deux pièces ou plus à l'aide de cet insert, ainsi que l'assemblage obtenu par ce procédé.

On sait qu'il n'est pas possible de souder directement des rails de chemin de fer sur des pièces de voie en acier à 12-14% en poids de manganèse, car, en procédant ainsi, les qualités mécaniques des pièces de voie seraient fortement altérées en raison des chocs thermiques produits par les opérations successives de soudure et de trempe.

Aussi, pour résoudre ce problème, on a déjà proposé de souder les extrémités des pièces de voie en acier au manganèse aux extrémités des rails en acier par l'intermédiaire d'un élément intercalaire ou insert de raccordement en acier d'une nuance appropriée.

Par ailleurs, le document EP-0 254 787 décrit un alliage inoxydable austénitique et amagnétique présentant d'excellentes propriétés mécaniques possédant la composition chimique suivante (% en poids):

| | |
|---|---|
| Carbone | 0,025 - 0,15% |
| Manganèse | 6 - 12 % |
| Silicium | 0,2 - 2 % |
| Nickel | 5 - 8 % |
| Chrome | 17 - 20 % |
| Molybdène | 0,01 - 0,5% |
| Azote | 0,12 - 0,30% |
| Fer (+éléments sous forme de traces) | balance |

Cet alliage austénitique et amagnétique peut notamment servir à la réalisation de pièces de fortes épaisseurs.

Toutefois, il n'a pas encore été proposé d'utiliser, pour réaliser l'insert de raccordement, un alliage spécifique conférant à l'insert des qualités assurant un module d'élasticité et une limite élastique élevés, ainsi qu'un durcissement superficiel à l'usage, de façon que la face d'usure de l'insert présente toujours une excellente continuité avec celle de la pièce de voie et du rail.

La présente invention a donc pour but de combler cette lacune.

A cet effet, l'invention a pour objet un insert pour le raccordement d'une pièce en acier à 12-14% en poids de manganèse à au moins une autre pièce en acier au carbone, caractérisé en ce qu'il est réalisé à partir d'un alliage austéno-ferritique qui possède la composition chimique suivante (% en poids) :

| | |
|---|---|
| Carbone | 0,025 - 0, 035 % |
| Manganèse | 6 - 11 % |
| Silicium | 0,5 - 1,5 % |
| Nickel | 5 - 8 % |
| Chrome | 17,5 - 20 % |
| Molybdène | < 0,5 % |
| Azote | 0,12 - 0,20 % |
| Phosphore et soufre | ≦ 0,030 % |
| Fer | balance |

et dont la teneur en ferrite delta mesurée par comptage est comprise entre environ 5 et 15%.

Cet insert est encore caractérisé par le fait qu'il subit une hypertrempe consistant en un maintien à une température comprise entre environ 1030 et 1100°C pendant environ deux heures, lequel maintien est suivi d'un arrêt à l'eau.

L'invention vise également un procédé de raccordement d'une pièce en acier au manganèse, telle que par exemple une pièce de voie, à au moins une autre pièce en acier au carbone, telle que par exemple un rail de chemin de fer, par l'intermédiaire d'un insert répondant aux caractéristiques définies ci-dessus, ce procédé étant caractérisé en ce que ledit insert, obtenu par moulage, est d'abord soudé sur la pièce en acier au carbone pour constituer un sous-ensemble qui subit un traitement thermique consistant en un refroidissement contrôlé depuis environ 900°C jusqu'à la temperature ambiante, avant d'être soudé sur la pièce en acier au manganèse.

Suivant une caractéristique de ce procédé, la soudure entre insert et pièce en acier au manganèse ne subit aucun traitement thermique autre qu'un refroidissement à l'air ambiant.

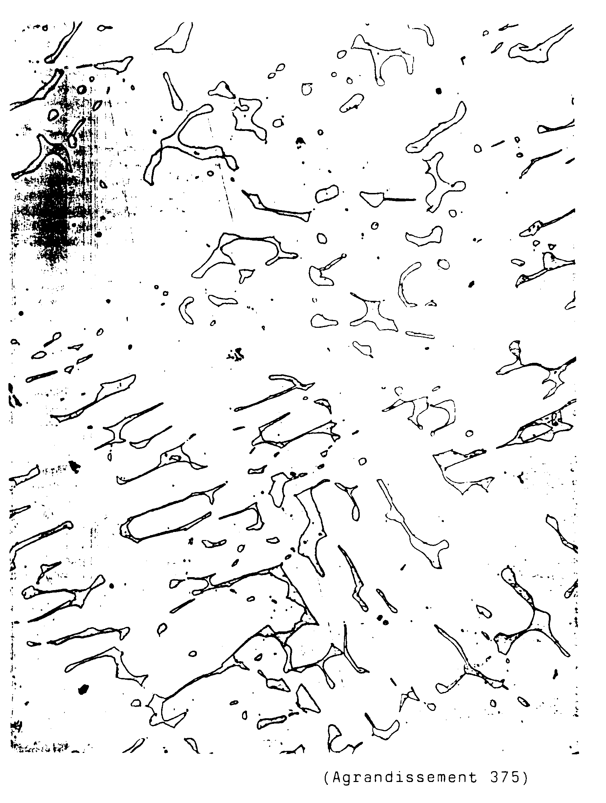

Dans le dessin annexé, on a représenté une micrographie d'un exemple d'insert correspondant à l'analyse suivante :

| | |
|---|---|
| Carbone | = 0,03 % |
| Manganèse | = 6,2 % |
| Silicium | = 0,80 % |
| Nickel | = 7,5 % |
| Chrome | = 19,20 % |
| Molybdène | = 0,02 % |
| Azote | = 0,13 % |
| Phosphore | < 0,03 % |
| Fer | = balance |

et dont la teneur en ferrite delta mesurée par comptage est de 6,1%.

L'invention vise encore un assemblage d'au moins deux pièces obtenu par le procédé ci-dessus, et plus particulièrement l'assemblage constitué par une pièce de voie et plusieurs rails raccordés à cette pièce à l'aide de l'insert spécial selon cette invention.

Mais d'autres caractéristiques et avantages de l'insert, du procédé de raccordement et de l'assemblage selon cette invention, apparaîtront mieux dans la description détaillée qui suit.

En premier lieu, on observera que les pièces en acier à relier par l'intermédiaire de l'insert peuvent avoir été soumises à un traitement approprié quelconque.

Plus précisément, la pièce en acier à 12-14% en poids de manganèse peut avoir été soumise à un durcissement superficiel après hypertrempe par toute méthode appropriée, telle que martelage, pressage, explosion, ou autre.

Quant à la pièce en acier au carbone, elle peut également avoir été traitée par toute méthode appropriée pour augmenter sa dureté.

L'insert conforme à cette invention est obtenu par moulage d'un alliage inoxydable austéno-ferritique qui possède la composition chimique donnée précédemment et dont la teneur en ferrite mesurée par comptage peut être comprise entre environ 6 et 10%. Les rapports en poids des constituants carbone-manganèse-silicium-nickel-chrome-molybdène et azote notamment confèrent à l'insert un module d'élasticité et une limite élastique élevés, ainsi qu'un durcissement superficiel à l'usage, ce qui est particulièrement avantageux dans l'application envisagée comme on le décrira plus loin.

On ajoutera ici que l'insert moulé dans la nuance subit un traitement d'hypertrempe qui consiste à maintenir l'insert à une température comprise entre 1030-1100°C pendant deux heures, ce après quoi on procède à un arrêt à l'eau.

On décrira maintenant comment s'effectue le raccordement, à l'aide de l'insert ci-dessus, d'une pièce en acier à 12-14% en poids de manganèse, qui peut être une pièce de voie, à une ou plusieurs autres pièces en acier au carbone, qui peuvent être des rails.

Tout d'abord on soude l'insert sur l'extrémité de la pièce en acier au carbone ou rail, étant entendu que l'insert a été soigneusement usiné pour lui donner la précision dimensionnelle voulue en rapport avec les pièces à réunir.

Ce soudage peut être effectué par une méthode de soudage appropriée et telle que par exemple soudage par électrode ou fil, aluminothermie, étincelage, bombardement électronique,plasma, etc...

Une fois réalisé le soudage de l'insert sur la pièce en acier au carbone, on soumet ce sous-ensemble à un traitement thermique avec apport de chaleur, contrôlé dans le temps, afin de satisfaire aux exigences métallurgiques propres à l'acier au carbone soumis à une élévation brutale de température.

Plus précisément, ce traitement consiste en un refroidissement contrôlé du sous-ensemble précité depuis environ 900°C jusqu'à la température ambiante.

Un tel traitement évite avantageusement l'apparition de constituants de trempe dans la zone de transition du côté du rail, lesquels constituants rendraient fragile l'assemblage.

Ensuite, le sous-ensemble rail-insert est mis aux dimensions nécessaires et la soudure est contrôlée à l'aide d'un moyen de contrôle non destructif. Puis le sous-ensemble est soudé par l'insert sur la pièce en acier au manganèse, c'est-à-dire la pièce de voie. Cette dernière soudure, qui est effectuée par tout moyen de soudage approprié, comme expliqué précédemment, ne fait l'objet d'aucun traitement thermique spécial, sinon que l'on procède à un simple refroidissement à l'air ambiant. L'assemblage ainsi obtenu présente toute les qualités mécaniques de solidité et de sécurité voulues.

Cela est dû notamment au fait que les propriétés de l'alliage utilisé pour l'insert éliminent le risque de fissuration à chaud lors des opérations de soudage de l'insert sur le rail et sur la pièce de voie. Au surplus, l'alliage constituant l'insert procure à cet insert des propriétés de durcissement à l'usage, ce qui permet de ne pas limiter sa longueur tout en conférant à sa face d'usure une continuité parfaite avec les faces d'usure du rail et de la pièce de voie.

## Revendications

1. Insert pour le raccordement d'une pièce en acier à 12-14% en poids de manganèse à au moins une autre pièce en acier au carbone, caractérisé en ce qu'il est réalisé à partir d'un alliage austéno-ferritique qui possède la composition chimique suivante (% en poids) :
| | |
|---|---|
| Carbone | 0,025 - 0,035% |
| Manganèse | 6 - 11 % |
| Silicium | 0,5 - 1,5 % |
| Nickel | 5 - 8 % |
| Chrome | 17,5 - 20 % |
| Molybdène | < 0,5 % |
| Azote | 0,12 - 0,20 % |
| Phosphore et soufre | ≦ 0,030 % |
| Fer | balance |
et dont la teneur en ferrite delta mesurée par comptage est comprise entre environ 5 et 15%.

2. Insert selon la revendication 1, caractérisé en ce qu'il subit une hypertrempe consistant en un maintien à une température comprise entre environ 1030 et 1100°C pendant environ deux heures, lequel maintien est suivi d'un arrêt à l'eau.

3. Insert selon la revendication 1, caractérisé en ce qu'il a la composition suivante :
| | |
|---|---|
| Carbone | = 0,03 % |
| Manganèse | = 6,2 % |
| Silicium | = 0,80 % |
| Nickel | = 7,5 % |
| Chrome | = 19,20 % |
| Molybdène | = 0,02 % |
| Azote | = 0,13 % |
| Phosphore | < 0,03 % |
| Fer | = balance |
et dont la teneur en ferrite delta mesurée par comptage est de 6,1%.

4. Procédé de raccordement d'une pièce en acier au manganèse, telle que par exemple une pièce de voie, à au moins une autre pièce en acier au carbone, telle que par exemple un rail de chemin de fer, par l'intermédiaire d'un insert suivant la revendication 1 ou 2, caractérisé en ce que ledit insert, obtenu par moulage, est d'abord soudé sur la pièce en acier au carbone pour constituer un sous-ensemble qui subit un traitement thermique consistant en un refroidissement contrôlé depuis environ 900°C jusqu'à la température ambiante, avant d'être soudé sur la pièce en acier au manganèse.

5. Procédé selon la revendication 4, caractérisé en ce que la soudure entre insert et pièce en acier au manganèse ne subit aucun traitement thermique autre qu'un refroidissement à l'air ambiant.

6. Assemblage d'au moins deux pièces obtenu par le procédé selon la revendication 4 ou 5.

## Claims

1. Insert for the connection of a steel part having 12-14 % by weight of manganese to at least one other carbon steel part, characterized in that it is made from an austeno-ferritic alloy which has the following chemical composition (in % by weight) :
| | |
|---|---|
| Carbon | 0.025 - 0.035 % |
| Manganese | 6 - 11 % |
| Silicon | 0.5 - 1.5 % |
| Nickel | 5 - 8 % |
| Chromium | 17.5 - 20 % |
| Molybdenum | < 0.5 % |
| Nitrogen | 0.12 - 0.20 % |
| Phosphorus and sulphur | ≦ 0.030 % |
| Iron | balance |
and the delta ferrite content of which as measured by counting lies between about 5 and 15 %.

2. Insert according to claim 1, characterized in that it undergoes a hyperquenching consisting in keeping same at a temperature lying between about 1,030 and 1,100° C for about two hours, which keeping is followed by a stop with water.

3. Insert according to claim 1, characterized in that it has the following composition :
| | |
|---|---|
| Carbon | = 0.03 % |
| Manganese | = 6.2 % |
| Silicon | = 0.80 % |
| Nickel | = 7.5 % |
| Chromium | = 19.20 % |
| Molybdenum | = 0.02 % |
| Nitrogen | = 0.13 % |
| Phosphorus | < 0.03 % |
| Iron | = balance |
and the delta ferrite content of which as measured by counting is 6.1 %.

4. Method of connection of a manganese steel part such for example as a railway track part to at least another carbon steel part such for an example as a railway track rail through the medium of an insert according to claim 1 or 2, characterized in that the said insert, obtained by moulding, is at first welded to the carbon steel part to constitute a sub-assembly which undergoes a thermal treatment consisting in a controlled cooling from about 900°C down to the ambient temperature before being welded to the manganese steel part.

5. Method according to claim 4, characterized in that the weld between the insert and the manganese steel part undergoes no other thermal treatment than a cooling with the ambient air.

6. Assembly of at least two parts obtained by the method according to the claim 4 or 5.

## Patentansprüche

1. Einsatzstück zur Verbindung eines Werkstückes aus Stahl mit 12-14 Gew.% Mangan mit wenigstens einem anderen Werkstück aus Kohlenstoffstahl, dadurch gekennzeichnet, dass es ausgehend von einer austenitischen-ferritischen Legierung, die die folgende chemische Zusammensetzung (in Gewichtprozenten) besitzt, hergestellt wird:
| | |
|---|---|
| Kohlenstoff | 0,025 - 0,035 % |
| Mangan | 6 - 11 % |
| Silizium | 0,5 - 1,5 % |
| Nickel | 5 - 8 % |
| Chrom | 17,5 - 20 % |
| Molybdän | < 0,5 % |
| Stickstoff | 0,12 - 0,20 % |
| Phosphor und Schwefel | ≦ 0,030 % |
| Eisen | Restbetrag |
und dessen durch Zählung gemessener Delta-Ferritgehalt zwischen ungefähr 5 und 15% liegt.

2. Einsatzstück nach Anspruch 1, dadurch gekennzeichnet, dass es einer Abschrecküberhärtung unterworfen wird, die in einem Halten bei einer zwischen ungefähr 1030 und 1100°C liegenden Temperatur während ungefähr zwei Stunden besteht, auf welches Halten ein Abschluss mit Wasser folgt.

3. Einsatzstück gemäss Anspruch 1, dadurch gekennzeichnet, dass es die folgende Zusammensetzung hat:
| | |
|---|---|
| Kohlenstoff | = 0,03 % |
| Mangan | = 6,2 % |
| Silizium | = 0,80 % |
| Nickel | = 7,5 % |
| Chrom | = 19,20 % |
| Molybdän | = 0,02 % |
| Stickstoff | = 0,13 % |
| Phosphor | < 0,03 % |
| Eisen | = Restbetrag |
und dessen durch Zählung gemessener Delta-Ferritgehalt 6,1 % beträgt.

4. Verfahren zum Verbinden eines Werkstückes aus Manganstahl, wie z.B. eines Gleistücks, mit wenigstens einem anderen Werkstück aus Kohlenstoffstahl, wie z.B. einer Eisenbahnschiene, über ein Einsatzstück gemäss Anspruch 1 oder 2, dadurch gekennzeichnet, dass das besagte durch Formgiessen erhaltene Einsatzstück zuerst an das Werkstück aus Kohlenstoffstahl geschweisst um eine Teileinheit zu bilden, die einer Wärmebehandlung unterworfen wird, die in einer kontrollierten Abkühlung von ungefähr 900°C hinab bis zu der Umgebungstemperatur, bevor es an das Werkstück aus Manganstahl geschweisst wird, besteht.

5. Verfahren nach Anspruch 4, dadurch gekennzeichnet, dass die Schweissnaht zwischen dem Einsatzstück und dem Werkstück aus Manganstahl keine andere Wärmebehandlung als eine Abkühlung durch die Umgebungsluft erfährt.

6. Durch das Verfahren gemäss Anspruch 4 oder 5 erzielter Zusammenbau von wenigstens zwei Werkstücken.
